# EUROPÄISCHE PATENTANMELDUNG

(11) **EP 1 231 308 A1**
(43) Veröffentlichungstag der Anmeldung: **14.08.2002**
(21) Anmeldenummer: 02001940.2
(22) Anmeldetag: 01.02.2002
(51) Int. Cl.: D02J 13/00, D02J 1/22, F16C 39/06, H02K 7/09, H05B 6/14

(54) **Galette zum Führen, Erwärmen und Fördern eines Fadens**

(30) Priorität: 01.02.2001 DE 10104424
(71) Anmelder: Neumag GmbH & Co. KG, 24536 Neumünster (DE)
(72) Erfinder: Kudrus, Heiner, 25355 Barmstedt (DE); von Zwehl, Dietmar, 37434 Bodensee (DE)
(74) Vertreter: Kahlhöfer, Hermann, Dipl.-Phys.

(57) **Zusammenfassung**

Die Erfindung betrifft eine Galette zum Führen, Fördern und Erwärmen eines Fadens, der am Umfang eines hohlzylindrischen Galettenmantels geführt wird. Der Galettenmantel ist hierzu an einem auskragenden Trägerdrehbar gelagert, wobei an dem Träger zumindest ein Magnetlager mit Lagerpolwicklungen und eine Heizeinrichtung mit Heizpolwicklungen angeordnet sind. Erfindungsgemäß sind einige Lagerpolwicklungen und zumindest eine Heizpolwicklung gemeinsam in einer Lagerebene angeordnet, so daß die Lagerbereiche beheizbar sind. Dabei sind die für die Lageerfassung des Galettenmantels vorgesehenen Sensoren außerhalb des zwischen dem Galettenmantel und dem Träger gebildeten Ringraums angeordnet, um eine thermische Überlastung der Sensoren zu vermeiden.

## Beschreibung

Die Erfindung betrifft eine Galette zum Führen, Erwärmen und Fördern eines Fadens gemäß dem Oberbegriff des Anspruchs 1.

Eine gattungsgemäße Galette ist aus der EP 0 770 719 B1 bekannt.

Die bekannte Galette besitzt einen drehbar gelagerten Galettenmantel, an dessen Umfang ein oder mehrere Fäden geführt sind. Der Galettenmantel ist hohlzylindrisch ausgebildet und an einem auskragenden Träger über mehrere Magnetlager gelagert. In dem zwischen dem Träger und dem Galettenmantel gebildeten Ringraum ist neben den Magnetlagern eine Heizeinrichtung angeordnet, um den Galettenmantel zu erwärmen. Bei dieser Anordnung treten grundsätzlich zwei Probleme auf, die die Funktion der Galette erheblich beeinträchtigen. Zum einen wird der Galettenmantel im Bereich der Magnetlager nur unzulänglich beheizt, so daß der oder die Fäden ausschließlich im mittleren Bereich des Galettenmantels geführt werden können, um eine thermische Behandlung an dem Faden oder den Fäden durchzuführen.

Ein weiteres Problem ist durch die Anordnung der für die Magnetlagerung zur Lageerfassung des Galettenmantels vorgesehenen Sensoren innerhalb des Ringraums gegeben. Im Innern des Galettenmantels herrschen bei heute üblichen Galetten Temperaturen von ca. 230° C, die auf die Sensoren somit unmittelbar einwirken. Da eine magnetische Lagerung eine sehr exakte Lageerfassung des Galettenmantels und somit sehr empfindliche Sensoren erfordern, diese jedoch die hohen Temperaturen kaum ertragen, ist eine sichere Lageerfassung des Galettenmantels und somit eine einwandfreie Lagerung durch die Magnetlager nicht gewährleistet.

Demnach ist es Aufgabe der Erfindung, eine Galette der eingangs genannten Art zu schaffen, bei welcher eine gleichmäßige Beheizung des Galettenmantels ohne wesentliche Beeinflussung der magnetischen Lagerung des Galettenmantels möglich ist.

Ein weiteres Ziel der Erfindung ist es, eine von der Heizeinrichtung im wesentlichen unbeeinflußte Lageerfassung des Galettenmantels zu ermöglichen.

Die der Erfindung zugrunde liegende Aufgabe wird durch eine Galette mit den Merkmalen nach Anspruch 1 und durch eine Galette mit den Merkmalen nach Anspruch 7 gelöst.

Die erfindungsgemäße Galette mit den Merkmalen nach Anspruch 1 zeichnet sich insbesondere dadurch aus, daß die Lagerbereiche des Galettenmantels unmittelbar beheizbar sind. Hierzu ist zumindest eine der Heizpolwicklungen in einer der Lagerebenen zwischen den Lagerpolwicklungen der Lagerebene angeordnet. Als Lagerebene wird diejenige Normalebene des Galettenmantels bezeichnet, in welcher die Lagerpolwicklungen des Magnetlagers angeordnet sind. Somit wird der Galettenmantel in der Lagerebene nicht nur radial abgestützt sondern gleichzeitig durch die von der Heizpolwicklung induzierten Ströme erwärmt. Hierbei ist der zwischen den Heizpolwicklungen und dem Galettenmantel eingestellte Luftspalt von dem zwischen den Lagerpolwicklungen und dem Galettenmantel geregelten Lagerspalt abhängig. Die erfindungsgemäße Kombination ermöglicht somit die Einstellung kleinster Luftspalte, so daß eine verlustarme Beheizung des Galettenmantels möglich ist. Hierbei können die Heizpolwicklungen und die Lagerpolwicklung sowohl gleichgerichtet oder entgegengerichtet wirken. Bei gleichgerichteter Wirkungsweise werden der Luftspalt und der Lagerspalt zwischen den Polenden und dem Galettenmantel gebildet. Bei entgegengerichteter Wirkungsweise wird der Luftspalt zwischen dem Galettenmantel und den Polenden der Heizwicklungen und der Lagerspalt zwischen einer Nabe oder Welle und den Polenden der Lagerwicklungen gebildet.

Um eine möglichst steife und schwingungsarme Lagerung des Galettenmantels und somit einen sich über die gesamte Länge des Galettenmantels erstreckenden gleichmäßigen Luftspalt zwischen den Heizpolwicklungen und dem Galettenmantel zu erhalten, ist die Weiterbildung der Erfindung gemäß Anspruch 2 besonders vorteilhaft. Hierbei sind die Lagerpolwicklungen im Magnetlager in zumindest drei Lagerebenen verteilt angeordnet, wobei zumindest einige der Heizpolwicklungen der Heizeinrichtung in den Lagerebenen zwischen den Lagerpolwicklungen vorgesehen sind. Eine Aufteilung der Lagerpolwicklungen in mehrere Lagerebenen besitzt den großen Vorteil, daß eine flächige Lagerung und somit eine flächige Abstützung des Galettenmantels erreicht wird. Die Verteilung der Lagerpolwicklungen und der Heizpolwicklungen über den Träger führt somit zu einer Vergleichmäßigung der Verteilung der Positionen, an denen Kraft zur radialen Lagerung des Galettenmantels sowie induzierte Ströme zur Erwärmung des Galettenmantels eingeleitet werden. Durch die flächige Lagerung des Galettenmantels wird somit die Tendenz der Galette, sich bei hohen Geschwindigkeiten zu verformen, z.B. bei Resonanzschwingungen durchzubiegen, wesentlich reduziert.

Gemäß einer vorteilhaften Weiterbildung der Erfindung nach Anspruch 3 können die Heizpolwicklungen und/oder die Lagerpolwicklungen von Lagerebene zu Lagerebene winkelversetzt über einen Träger verteilt angeordnet sein. Bei einer winkelversetzten Anordnung zweier Polwicklungen ist die Winkelposition bei der zweiten Polwicklung auf einer zweiten Lagerebene von der einer ersten Polwicklung auf einer ersten Lagerebene unterschieden. Die Winkelposition einer Polwicklung ist die Position der Polwicklung am Umfang des Trägers. Wählt man die Position senkrecht oberhalb der Drehachse des Trägers als Referenzposition, so sind die Winkelpositionen der Position senkrecht unterhalb der Drehachse 180° und die seitlichen Position auf Höhe der Drehachse 90° und 270°.

Bei einer winkelversetzten Anordnung der Lagerpolwicklungen variieren die Richtungen, aus denen Kraft auf den Galettenmantel ausgeübt wird. Dies ermöglicht eine radiale Lagerung des Galettenmantels bei einer Anordnung von nur ein oder zwei Lagerpolwicklungen in einer Lagerebene, so daß in der Lagerebene ein relativ großer Einbauraum zur Aufnahme der Heizpolwicklungen zur Verfügung steht. Hierbei wirken die Lagerpolwicklungen verschiedener Lagerebenen zusammen.

Eine spiralförmige Anordnung zumindest einiger Heizpolwicklungen und/oder Lagerpolwicklungen von Lagerebene zu Lagerebene gemäß Anspruch 4 vergleichmäßigt die Verteilung der Polwicklungen auf dem Träger weiter. Hierbei besteht auch die Möglichkeit, daß die Heizpolwicklungen einer Lagerebene gemeinsam zu einer Heizzone zusammengeschlossen sind. In diesem Fall würde der Galettenmantel in axialer Richtung in einer Mehrzahl von Heizzonen aufgeteilt sein, wobei jede der Heizzonen durch zumindest eine oder mehrere Heizpolwicklungen beheizbar ist.

Es ist jedoch auch möglich, die Heizpolwicklungen und/oder die Lagerpolwicklungen in Umfangsrichtung des Trägers überlappend zueinander anzuordnen. Damit ist insbesondere zur Beheizung des Galettenmantels eine gleichmäßige und hohe Energiedichte zu erreichen.

Die erfindungsgemäße Galette mit den Merkmalen nach Anspruch 7 stellt eine weitere Lösung der zugrundeliegenden Aufgabe dar. Hierbei sind mehrere zur Bestimmung der Lage des Galettenmantels vorgesehene Sensoren außerhalb des Ringraums angeordnet, so daß keine thermische Überbelastung der Sensoren stattfinden kann. Die Sensoren sind mit einer die Lagerpolwicklung steuernden Steuereinrichtung gekoppelt. Hierbei können die Sensoren an Stellen positioniert sein, in welchen die Umgebung eine empfindliche Lagemessung in jedem Betriebsbereich zuläßt. Es ist vorausgesetzt, daß die zwischen den Lagerpolwicklungen und dem Galettenmantel wirkenden Lagerspaltveränderungen sich aufgrund der Steifigkeit des Galettenmantels an jede mit dem Galettenmantel verbundene Position fortpflanzt.

Bei einer besonders bevorzugten Weiterbildung der Erfindung sind die Sensoren im Bereich der Lagerebenen angeordnet, wobei im Bereich der Lagerebenen außerhalb des Ringraums Luftspalte zwischen dem Galettenmantel und dem Träger gebildet sind, die im wesentlichen parallel zu einem zwischen dem Galettenmantel und den Polenden der Lagerpolwicklungen gebildeten Lagerspalt sind. Dabei sind die Sensoren zur Überwachung der Luftspalte als Abstandssensoren ausgeführt. Dies ermöglicht eine sehr feinfühlige und empfindliche Lageerfassung, die eine exakte Steuerung der Magnetlager gewährleistet.

Die Luftspalte können hierbei einerseits an einem freien Ende des Trägers innerhalb des Galettenmantels zwischen einer mit dem Galettenmantel verbundenen Nabe und dem Träger ausgebildet sein oder andererseits an dem eingespannten Ende des Trägers außerhalb des Galettenmantels zwischen dem Galettenmantel und einem mit dem Träger verbundenen Kragen vorgesehen sein. Damit läßt sich die Lage des Galettenmantels an beiden Enden bestimmen, so daß eine Ausrichtung durch die Magnetlagerung sichergestellt ist.

Bei einer besonders vorteilhaften Weiterbildung der Erfindung gemäß Anspruch 11 ist jeder Lagerpolwicklung ein Sensor zugeordnet, wobei die Lagerpolwicklungen jeweils einzeln durch die Steuereinrichtung steuerbar sind. Diese Ausbildung ist besonders vorteilhaft bei der Anordnung einzelner Lagerpolwicklungen in einzelnen Lagerebenen, um möglichst mehrere Heizpolwicklungen in den Lagerebenen anzuordnen.

Es ist jedoch auch möglich, die Lagerpolwicklungen jeweils paarweise durch die Steuereinrichtung anzusteuern. Hierbei kann das Lagerpolwicklungspaar in einer oder in zwei Lagerebenen angeordnet sein.

Zur Aufnahme der axialen Kräfte wird gemäß der Ausbildung nach Anspruch 13 der Galettenmantel durch ein zusätzliches Axiallager gelagert. Das Axiallager wird bevorzugt als ein axial wirkendes Magnetlager ausgebildet. Es ist jedoch auch möglich, das Axiallager durch Wälzlager in axialer oder radialer Bauweise zu bilden.

Um einen Notlauf des Galettenmantels zu gewährleisten, ist zumindest ein Fanglager vorgesehen, welches als berührungsfreies Radiallager oder als elastisch angekoppeltes Radiallager ausgebildet sein kann.

Einige Ausführungsbeispiele der erfindungsgemäßen Galette sind anhand der beigefügten Zeichnungen näher erläutert.

Es stellen dar:
- Fig. 1 und 2: schematisch ein erstes Ausführungsbeispiel der erfindungsgemäßen Galette;
- Fig. 3 und 4: schematisch ein weiteres Ausführungsbeispiel der erfindungsgemäßen Galette.

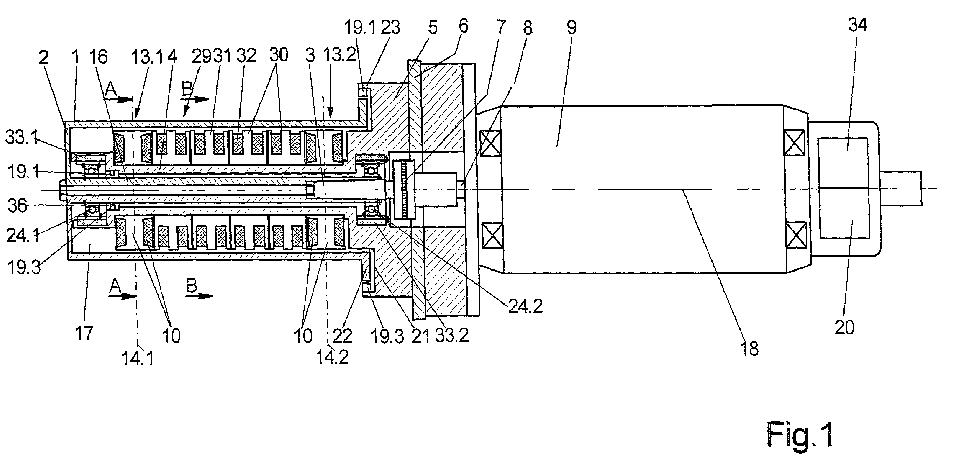

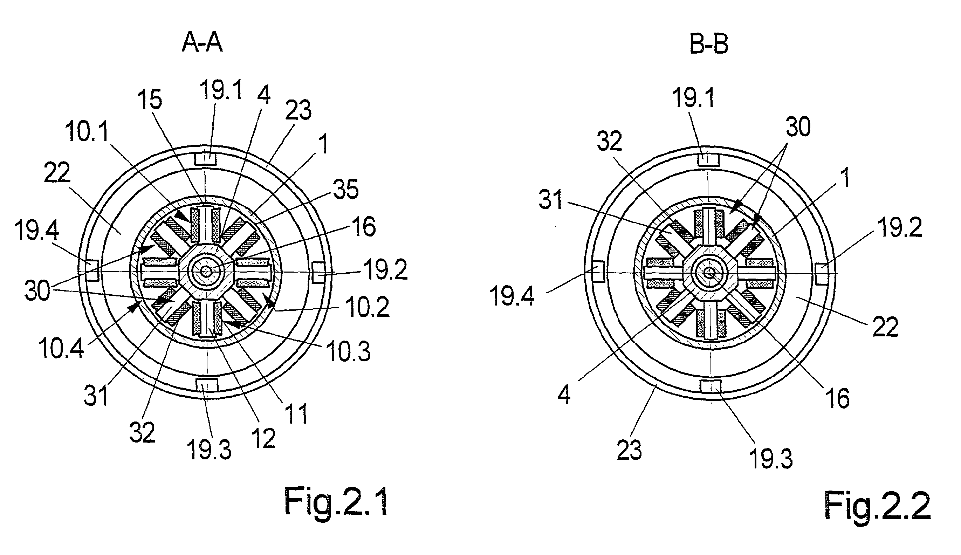

In den Figuren 1 und 2 ist ein erstes Ausführungsbeispiel der erfindungsgemäßen Galette dargestellt. Die Figur 1 zeigt die für die Erfindung wesentlichen Teile der Galette anhand eines parallel zur und durch die Drehachse verlaufenden Schnitts und Fig. 2 schematisch Querschnitte senkrecht zur Drehachse, wobei in Fig. 2.1 ein Schnitt durch eine der Lagerebenen und Fig. 2.2 ein Schnitt außerhalb der Lagerebenen darstellt.

Die nachfolgende Beschreibung gilt somit für beide Figuren, insoweit kein ausdrücklicher Bezug zu einer der Figuren genommen ist.

Das Ausführungsbeispiel der erfindungsgemäßen Galette weist einen Galettenmantel 1 auf, der über eine Stirnwand 2 und eine Nabe 16 mit einer im Innern des Galettenmantels 1 verlaufenden Welle 3 drehfest verbunden ist. Die Welle 3 ist mit ihrem gegenüberliegenden Ende über eine Kupplung 7 an eine Motorwelle 8 eines Motors 9 angeschlossen. Der als Elektromotor ausgebildete Motor 9 ist in der Fig. 1 nur in einer Ansicht dargestellt.

Der Galettenmantel 1 ist durch zwei radial wirkende Magnetlager 13.1 und 13.2 an einem auskragenden Träger 4 gelagert, die innerhalb eines zwischen dem Galettenmantel 1 und dem auskragenden Träger 4 gebildeten Ringraum 17 angeordnet sind. Die Magnetlager 13.1 und 13.2 sind in Abstand zueinander an dem Träger 4 angebracht, wobei sich das Magnetlager 13.1 an einem freien Ende des Trägers 4 und das Magnetlager 13.2 im Bereich des fest eingespannten Endes des Trägers 4 befindet. Der Träger 4 ist hohlzylindrisch ausgebildet und erstreckt sich innerhalb des Galettenmantels 1 bis kurz vor die Stirnwand 2. Der Träger 4 wird hierbei von der Nabe 16 und der Welle 3 durchdrungen. Auf der zur Stirnwand 2 gegenüberliegenden Seite ist der Träger 4 über einen Bund 5 an einem Gestell 6 befestigt.

Die Magnetlager 13.1 und 13.2 weisen jeweils vier Lagerpolwicklungen 10.1 bis 10.4 auf, die an dem Träger 4 jeweils in einer Lagerebene 14.1 und 14.2 verteilt angeordnet sind. Jede der Lagerpolwicklungen 10 besteht aus einer Erregerwicklung 11 und einem Polelement 12. Die Lagerpolwicklungen 10.1 bis 10.4 der Magnetlager 13.1 und 13.2 sind in der Lagerebene 14 winkelversetzt an dem Träger 4 verteilt angeordnet. Der Winkelversatz beträgt dabei jeweils 90°. Diese Situation ist in Fig. 2.1 dargestellt, wobei die Fig. 2.1 sowohl einen Querschnitt durch das Magnetlager 13.1 als auch einen Querschnitt durch das Magnetlager 13.2 darstellt.

Am Umfang des Trägers 4 ist eine Heizeinrichtung 29 zur Beheizung des Galettenmantels 1 angeordnet. Die Heizeinrichtung 29 weist hierzu eine Vielzahl von Heizpolwicklungen 30 auf, die sowohl in axialer Richtung des Trägers 4 als auch in radialer Richtung des Trägers 4 nebeneinander im wesentlichen gleichmäßig verteilt angeordnet sind. Einige der Heizpolwicklungen 30 sind in den Lagerebenen 14.1 und 14.2 zwischen den Lagerpolwicklungen 10 am Träger 4 angeordnet. Jede der Heizpolwicklungen 30 besteht jeweils aus einem Polelement 31 und einer Erregerwicklung 32. Die Erregerwicklungen 32 der Heizpolwicklungen 30 sind gemeinsam oder in Gruppen zu einzelnen Heizzonen mit einer Heizsteuerung 34 verbunden. Die Heizsteuerung 34 befindet sich auf der Antriebsseite der Galette.

In der Fig. 2 ist jeweils ein Querschnitt einer der Lagerebenen 14.1 oder 14.2 (Fig. 2.1) sowie ein Querschnitt durch den mittleren Bereich der Galette (Fig. 2.2) gezeigt. Zur Aufnahme der Heizpolwicklungen 30 und der Lagerpolwicklungen 10 ist der Träger 4 als ein Vielkant ausgebildet. Hierbei sind insgesamt acht Außenflächen am Träger 4 gebildet, an welchen die Polelemente 12 der Lagerpolwicklungen 10 und die Polelemente 31 der Heizpolwicklungen 30 befestigt sind. Wie in Fig. 2.1 dargestellt, sind die Lagerpolwicklungen 10.1 bis 10.4 des Magnetlagers 13.1 an jeweils vier Außenflächen des Trägers 4 angeordnet. Die Lagerpolwicklungen 10.1 bis 10.4 sind dabei jeweils um 90° versetzt angeordnet. An den zwischen den Lagerpolwicklungen 10.1 bis 10.4 angeordneten Außenflächen des Trägers 4 befindet sich jeweils eine Heizpolwicklung 30. Hierbei ist zwischen den Polenden der Heizpolwicklungen 30 und dem Galettenmantel 1 ein Luftspalt 35 gebildet. Zwischen den Polenden der Lagerpolwicklungen 10 und dem Galettenmantel 1 ist ein Lagerspalt 15 gebildet. Der Lagerspalt 15 und der Luftspalt 35 können in ihrer Spaltbreite gleich groß oder unterschiedlich ausgebildet sein.

In Fig. 2.2 ist ein Querschnitt außerhalb der Lagerebenen 14.1 und 14.2 gezeigt. Hierbei sind an den acht Außenflächen des Trägers 4 jeweils die Polelemente 31 der Heizpolwicklungen 30 befestigt. Insgesamt sind somit acht Heizpolwicklungen 30 winkelversetzt an dem Träger 4 angeordnet. Der Winkelversatz beträgt hierbei 45°. Zwischen den Polenden der Heizpolwicklungen 30 und dem Galettenmantel 1 ist der Luftspalt 35 gebildet.

Aus der Darstellung in Fig. 1 ist zu entnehmen, daß der Durchmesser des Bundes 5 des Trägers 4 an seinem dem Gestell 6 zugewandten Ende größer als die beiden übereinstimmenden Durchmesser der Stirnwand 2 und das Galettenmantels 1 ist. Der Bund 5 des Trägers 4 weist zum Galettenmantel 1 hin einen ringförmigen Kragen 23 auf, der einen am Ende des Galettenmantels 1 ausgebildeten Bund 22 mit Abstand überdeckt. Auf der Innenseite des Kragens 23 zum Bund 22 des Galettenmantels 1 hingewandt sind mehrere Sensoren 19 angeordnet. Insgesamt sind vier Sensoren 19.1 bis 19.4 vorgesehen, wobei in Fig. 1 nur die Sensoren 19.1 und 19.3 sichtbar sind. die Sensoren 19.1 und 19.4 sind jeweils den Lagerpolwicklungen 10.1 bis 10.4 des Magnetlagers 13.2 zugeordnet. Die Sensoren 19.1 bis 19.4 sind als Abstandssensoren zur Lageerfassung des Galettenmantels 1 vorgesehen und über hier nicht gezeigte Signalleitungen mit einer Steuereinrichtung 20 gekoppelt. Die Steuereinrichtung 20 ist über Steuerleitungen mit den Erregerwicklungen 11 der Lagerpolwicklungen 10.1 bis 10.4 des Magnetlagers 13.2 verbunden.

Zur Lageüberwachung des Galettenmantels 1 wird der zwischen den Sensoren 19 und dem Bund 22 gebildete Luftspalt überwacht.

An dem freien Ende des Trägers 4 ist innerhalb des Trägers im Bereich der Lagerebene 14.1 ein Einschnitt 36 an dem Träger 4 ausgebildet. In dem Einschnitt 36 sind mehrere Sensoren 19.1 bis 19.4 winkelversetzt zu einander in einer Ebene verteilt an dem Träger 4 befestigt. Die Sensoren 19.1 bis 19.4 sind hierbei den Lagerpolwicklungen 10.1 bis 10.4 des Magnetlagers 13.1 zugeordnet. Auch hierbei sind die Sensoren 19.1 bis 19.4 über Signalleitungen mit der Steuereinrichtung 20 gekoppelt. Die Erregerwicklungen 11 der Lagerpolwicklungen 10 des Magnetlagers 13.1 werden übe die Steuereinrichtung 20 gesteuert. Zur Lagererfassung des Galettenmantels 1 wird dabei ein zwischen den Sensoren 19 und der Nabe 16 gebildeter Luftspalt überwacht.

Zur Aufnahme axialer Kräfte des Galettenmantels 1 sowie zur Anlauf- und Notlagerung sind zwei Radiallager 24.1 und 24.2 vorgesehen. Hierbei weisen die Enden des Trägers 4 zur Nabe 16 des Galettenmantels 1 hin ringförmige Einbuchtungen auf, die jeweils eines der auf dem Träger 4 angeordneten Radiallager 24.1 und 24.2 aufnehmen. Hierbei sind die Radiallager 24.1 und 24.2 jeweils über eine Hülse 33 zwischen dem Träger 4 und der Nabe 16 angeordnet. Die Hülse 33 könnte hierzu beispielsweise einen innenliegenden Metallring zur Aufnahme der Lager 24 und einen außenliegenden Elastomerring zur Abstützung gegenüber dem Träger 4 aufweisen. Damit ist ein sicheres Anlaufen bzw. ein Notlauf des Galettenmantels unabhängig von der Magnetlagerung gewährleistet. Zur Aufnahme der Axialkraft sind die Radiallager 24.1 und 24.2 gegeneinander verspannt, beispielsweise wie dargestellt durch mehrere Sicherungsringe.

Im Betrieb wird die aktuelle Lage des Galettenmantels durch die Sensoren 19 im Bereich der Lagerebene 14.1 und 14.2 gemessen und die Meßwerte der Steuereinrichtung 20 zugeleitet. In der Steuereinrichtung 20 wird aus den Meßwerten die Lage des Galettenmantels in den Lagerebenen 14.1 und 14.2 ermittelt und entsprechend der gewünschten Korrektur der Lage werden die einzelnen Erregerwicklungen 11 der Lagerpolwicklungen 10 der Magnetlager 13.1 und 13.2 angesteuert. Dabei werden die Lagerpolwicklungen eines der Magnetlager 13.1 oder 13.2 einzeln oder paarweise angesteuert, so daß die Lage des Galettenmantels 1 die gewünschte Position annimmt.

Gleichzeitig wird der Galettenmantel 1 aufgrund der durch die Heizpolwicklungen 30 in den Galettenmantel 1 induzierten Ströme erwärmt. Zur Regelung der Oberflächentemperatur des Galettenmantels ist ein oder mehrere Temperatursensoren (hier nicht dargestellt) vorgesehen, die über Signalleitungen mit der Heizsteuerung 34 verbunden sind und somit eine Sollwerteinstellung der Oberflächentemperaturen ermöglichen. Entsprechend der Signale werden über die Heizsteuerung 34 die Erregerwicklungen 32 der Heizpolwicklungen 30 gesteuert. Bei Ausbildung mehrerer Heizzonen durch die Heizpolwicklungen ist jeder Heizzone jeweils ein Temperatursensor zugeordnet, welcher die Ansteuerung der Heizpolwicklungen der betreffenden Heizzone zum Erreichen einer vorgegebenen Sollwerttemperatur über die Heizsteuerung ermöglichen. Durch die erfindungsgemäße Anordnung der Heizpolwicklungen 30 wird im wesentlichen der gesamte Mantelbereich des Galettenmantels 1 erwärmt. Somit können die Bereiche in den Lagerebenen ebenfalls zur Fadenführung und Fadenbehandlung benutzt werden.

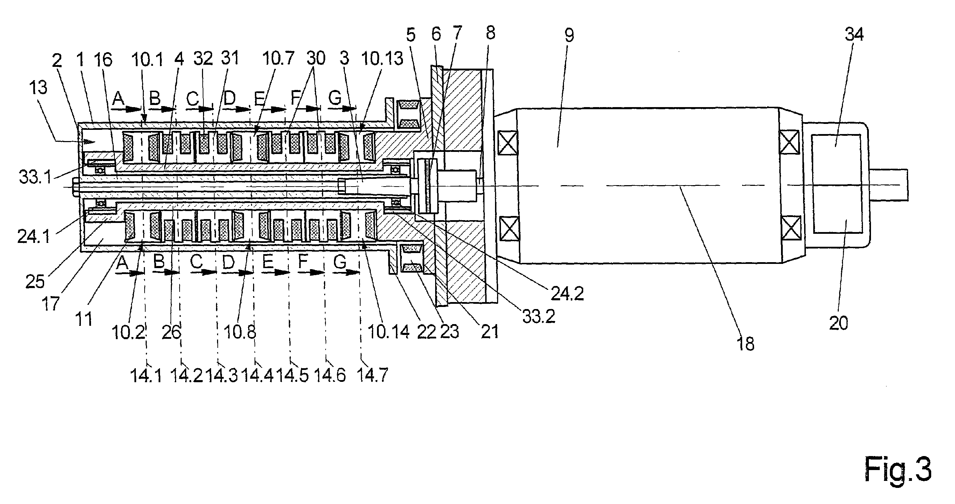

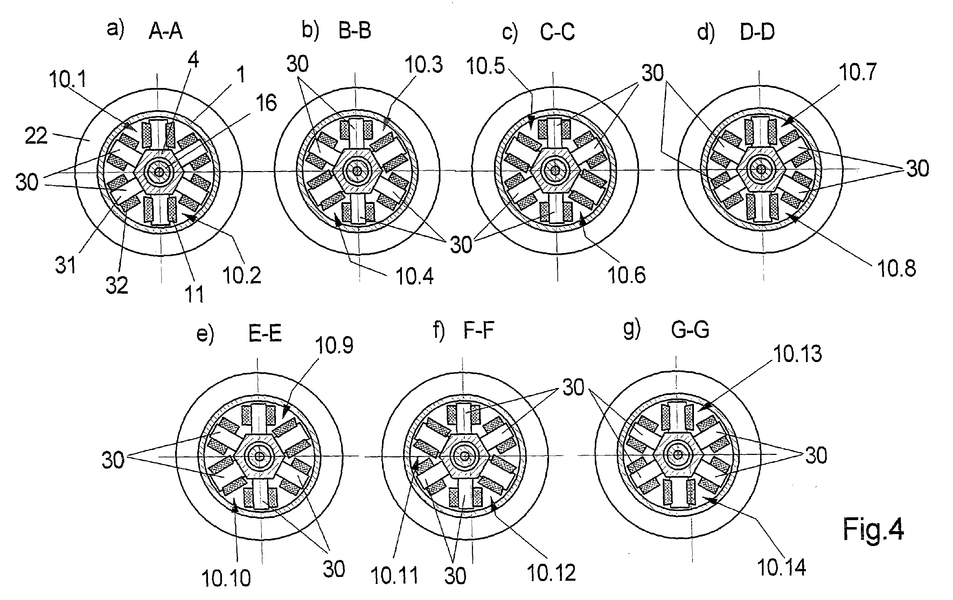

In Fig. 3 und 4 ist ein weiteres Ausführungsbeispiel der erfindungsgemäßen Galette dargestellt. Hierbei zeigt Fig. 3 schematisch einen Längsschnitt der für die Erfindung wesentlichen Teile der Galette und Fig. 4a) bis g) jeweils einen Querschnitt der Lagerebenen der Galette. Die Bauteile gleicher Funktion sind mit identischen Bezugszeichen bezeichnet.

Die nachfolgende Beschreibung gilt für die Figuren 3 und 4, insoweit kein ausdrücklicher Bezug zu einer der Figuren genommen ist. Das Ausführungsbeispiel entspricht dem Ausführungsbeispiel der erfindungsgemäßen Galette nach Fig. 1 im wesentlichen, so daß nachfolgend nur die Unterschiede erläutert werden. Der Galettenmantel 1 ist durch nur ein Magnetlager 13 an dem auskragenden Träger 4 gelagert. Hierzu weist das Magnetlager 13 insgesamt vierzehn Lagerpolwicklungen 10.1 bis 10.14 auf, die paarweise einander gelegenüberliegend in jeweils einer Lagerebene angeordnet sind. Somit sind die Lagerpolwicklungen 10.1 bis 10.14 auf insgesamt sieben Lagerebenen 14.1 bis 14.7 aufgeteilt. Die Winkelpositionen der beiden Lagerpolwicklungen 10.1 und 10.2 bis 10.12 und 10.14 in den Lagerebenen 14.1 bis 14.7 betragen 0° und 180°, 60° und 240°, 120° und 30°, 0° und 180°, 60° und 240°, 120° und 300° und 0° und 180°, d.h. die Lagerpolwicklungen 10.1 bis 10.14 sind von Lagerebene zu Lagerebene winkelversetzt angeordnet. Die Lagerpolwicklungen 10.1 bis 10.14 bilden zwei Spiralen um die Drehachse 18 mit jeweils zwei Umdrehungen mit konstanter Steigung.

Die Lagerpolwicklungen 10.1 bis 10.14 besitzen jeweils zylindrische Polelemente 12, um die die Erregerwicklungen 11 gewickelt sind. Die Polelemente 12 der Lagerpolwicklungen 10.1, 10.2 bis 10.13 bis 10.14 sind paarweise in ihrer Lagerebene 14 auf zwei gegenüberliegenden Außenflächen des ebenfalls als Sechskant ausgebildeten Abschnitts 26 des Trägers 4 angeordnet.

Zwischen den Lagerpolwicklungen 10.1 bis 10.14 sind an dem Träger 4 mehrere Heizpolwicklungen 30 der Heizeinrichtung 29 angeordnet, welche den Galettenmantel induktiv erwärmt. Hierzu sind die Heizpolwicklungen 30 an den übrigen Außenflächen des Abschnitts 26 in jeder der Lagerebenen angeordnet. Die Heizpolwicklungen 30 bestehen hierbei aus einem Polelement 31 und einer Erregerwicklung 32. Die Erregerwicklungen 32 sind über Steuerleitungen mit der Heizsteuereinrichtung 34 verbunden. Die gleichmäßige Verteilung der Lagerpolwicklungen 10.1 bis 10.14 an dem Träger 4 ermöglicht auch eine gleichmäßige Verteilung der Heizpolwicklungen 30 an dem Träger und damit, neben der flächigen Lagerung, eine gleichmäßige Beheizung des Galettenmantels 1.

In den Figuren 3 und 4 sind die Sensoren 19 der Übersicht halber weggelassen.

An dem Bund 22 des Galettenmantels 1 befindet sich hierbei ein magnetisches Axiallager 23. Die mit Erregerwicklungen versehenen Lagerpolelemente des Axiallagers 23 sind auf einer Stufe 21 des Bundes 5 des Tragrohres 4 angeordnet und weisen zu dem Bund 22 des Galettenmantels 1 hin.

Außerdem ist zumindest ein als Fanglager dienendes, mechanisches berührungsfreies Radiallager 24 vorgesehen. In diesen Beispielen weisen die Enden des Trägers 4 zur Nabe 16 des Galettenmantels 1 hin ringförmige Einbuchtungen auf, die jeweils eines der auf dem Träger 4 angeordneten Radiallager 24 aufnehmen.

Im Betrieb erfolgt das Zusammenwirken der Lagerpolwicklungen 10.1 bis 10.14 z.B. indem bei bestimmten Fehllagen des Galettenmantels bestimmte Lagerpolwicklungen 10.1 bis 10.14 angesteuert werden.

Dabei wirkt jede der Lagerpolwicklungen 10.1 bis 10.14 anziehend auf den Galettenmantel 1 ein. Zur Korrektur der Lage des Galettenmantels wird die Kraft einzelner Lagerpolwicklungen, nämlich der in den Fällen a) bis f) benannten Lagerpolwicklungen, verstärkt, indem der den entsprechenden Erregerwicklungen 11 aufgegebene Strom verstärkt wird. Dabei kann die Stromstärke und damit die Kraft auf den Galettenmantel gleich bleiben.

Alternativ könnte die gesamte Stromstrecke für die Lagerpolwicklungen 10.1 bis 10.14 konstant gehalten werden und zur Korrektur der Lage des Galettenmantels 1 nur eine Umverteilung der den einzelnen Lagerpolwicklungen 10.1 bis 10.14 zugeführten Teilstromstärken vorgenommen werden.

Die in den Figuren 1 bis 4 dargestellten Ausführungsbeispielen einer erfindungsgemäßen Galette sind in ihrem Aufbau und ihrer Anordnung der Bauteile beispielhaft. Die Erfindung erstreckt sich auch auf die nicht dargestellten Ausführungsbeispiele, bei welchem zumindest eine Heizpolwicklung in die Lagerebenen zwischen den Lagerpolwicklungen angeordnet ist, um den Lagerbereich am Galettenmantel zu beheizen. So könnte beispielsweise der Lagerbereich sich zwischen einer innenliegenden Welle oder Nabe und der nach innen wirkenden Lagerpolwicklung erstrecken.

### Bezugszeichenliste

- 1: Galettenmantel
- 2: Stirnwand
- 3: Welle
- 4: Träger
- 5: Bund
- 6: Gestell
- 7: Kupplung
- 8: Motorwelle
- 9: Motor
- 10: Lagerpolwicklungen
- 11: Erregerwicklung
- 12: Polelement
- 13: Magnetlager
- 14: Lagerebene
- 15: Lagerspalt
- 16: Nabe
- 17: Ringraum
- 18: Drehachse
- 19: Sensor
- 20: Steuereinrichtung
- 21: Stufe
- 22: Bund
- 23: Kragen
- 24: Radiallager
- 25: Abschnitt
- 26: Abschnitt
- 27: Bodenplatte
- 28: Schenkel
- 29: Heizeinrichtung
- 30: Heizpolwicklung
- 31: Polelement
- 32: Erregerwicklung
- 33: Hülse
- 34: Heizsteuerung
- 35: Luftspalt
- 36: Stufe

## Patentansprüche

1. Galette zum Führen, Erwärmen und Fördern eines Fadens mit einem antreibbaren, hohlzylinderischen Galettenmantel (1), an dessen Umfang der Faden geführt ist, mit einem auskragenden Träger (4), an welchem der Galettenmantel (1) durch zumindest ein radial wirkendes Magnetlager (13) mit mehreren Lagerpolwicklungen (10) in zumindest einer Lagerebene (14) drehbar gelagert ist, und mit einer Heizeinrichtung (29), welche mehrere Heizpolwicklungen (30) am Träger (4) aufweist, wobei die Lagerpolwicklungen (10) und die Heizpolwicklungen (30) innerhalb eines zwischen dem Träger (4) und dem Galettenmantel (1) gebildeten Ringraumes (17) angeordnet sind, **dadurch gekennzeichnet, dass** zumindest eine der Heizpolwicklungen (30) in der Lagerebene (14) zwischen den Lagerpolwicklungen (10) der betreffenden Lagerebene (14) angeordnet ist.

2. Galette nach Anspruch 1, **dadurch gekennzeichnet, dass** die Lagerpolwicklungen (10) der Magnetlager (13) in zumindest drei Lagerebenen (14) verteilt angeordnet sind und daß zumindest einige der Heizpolwicklungen (30) in den Lagerebenen (14) zwischen den Lagerpolwicklungen (10) angeordnet sind.

3. Galette nach Anspruch 1 oder 2, **dadurch gekennzeichnet, daß** die Heizpolwicklungen (30) und/oder die Lagerpolwicklungen (10) von Lagerebene (14.1) zu Lagerebene (14.2) winkelversetzt über den Träger (4) verteilt angeordnet sind.

4. Galette nach Anspruch 3, **dadurch gekennzeichnet, daß** die Heizpolwicklungen (30) und/oder die Lagerpolwicklungen (10) in Längsrichtung des Trägers (4) eine spiralförmige Anordnung bilden.

5. Galette nach einem der Ansprüche 1 bis 4, **dadurch gekennzeichnet, dass** die Heizpolwicklungen (30) und die Lagerpolwicklungen (10) in Umfangsrichtung des Trägers (4) überlappend zueinander angeordnet sind.

6. Galette nach einem der Ansprüche 1 bis 5, **dadurch gekennzeichnet, dass** außerhalb des Ringraumes (17) mehrere Sensoren (19) zur Lagebestimmung des Galettenmantels (1) vorgesehen sind, die mit einer die Lagerpolwicklungen (10) steuernden Steuereinrichtung (20) verbunden sind.

7. Galette zum Führen, Erwärmen und Fördern eines Fadens mit einem antreibbaren, hohlzylinderischen Galettenmantel (1), an dessen Umfang der Faden geführt ist, mit einem auskragenden Träger (4), an welchem der Galettenmantel (1) durch zumindest ein radial wirkendes Magnetlager (13) mit mehreren Lagerpolwicklungen (10) in zumindest einer Lagerebene (14) drehbar gelagert ist, und mit einer Heizeinrichtung (29), welche mehrere Heizpolwicklungen (30) am Träger (4) aufweist, wobei die Lagerpolwicklungen (10) und die Heizpolwicklungen (30) innerhalb eines zwischen dem Träger (4) und dem Galettenmantel (1) gebildeten Ringraumes (17) angeordnet sind, **dadurch gekennzeichnet, dass** außerhalb des Ringraumes (17) mehrere Sensoren (19) zur Lagebestimmung des Galettenmantels (1) vorgesehen sind, die mit einer die Lagerpolwicklungen (10) steuernden Steuereinrichtung (20) verbunden sind.

8. Galette nach Anspruch 6 oder 7, **dadurch gekennzeichnet, dass** die Sensoren (19) im Bereich der Lagerebenen (14) angeordnet sind, daß im Bereich der Lagerebenen (14) außerhalb des Ringraumes (17) Luftspalte zwischen dem Galettenmantel (1) und dem Träger (4) ausgebildet sind, welche Luftspalte im wesentlichen parallel zu einem zwischen dem Galettenmantel (1) und den Polenden der Lagerpolwicklungen (10) gebildeten Lagerspalt (15) sind, und daß die Sensoren (19) zur Überwachung der Luftspalte als Abstandessensoren ausgeführt sind.

9. Galette nach Anspruch 8, **dadurch gekennzeichnet, dass** einer der Luftspalte am freien Ende des Trägers (4) innerhalb des Galettenmantels (1) zwischen einer mit dem Galettenmantel (1) verbundenen Nabe (16) und dem Träger (4) ausgebildet ist.

10. Galette nach einem der Ansprüche 8 oder 9, **dadurch gekennzeichnet, dass** einer der Luftspalte am eingespannten Ende des Trägers (4) außerhalb des Galettenmantels (1) zwischen dem Galettenmantel (1) und einem mit dem Träger (4) verbunden Kragen (23) ausgebildet ist.

11. Galette nach einem der Ansprüche 6 bis 10, **dadurch gekennzeichnet, daß** jedem der Lagerpolwicklungen (10) einer der Sensoren (19) zugeordnet ist und daß die Lagerpolwicklungen (10) jeweils einzeln durch die Steuereinrichtung (20) steuerbar sind.

12. Galette nach Anspruch 11, **dadurch gekennzeichnet, daß** die Lagerpolwicklungen (10) jeweils paarweise durch die Steuereinrichtung (20) steuerbar sind.

13. Galette nach einem der Ansprüche 1 bis 12, **dadurch gekennzeichnet, dass** der Galettenmantel (1) durch ein zusätzliches Axiallager (23) gelagert ist und daß das Axiallager (23) durch ein axial wirkendes Magnetlager gebildet ist.

14. Galette nach einem der Ansprüche 1 bis 13, **dadurch gekennzeichnet, daß** zumindest ein Fanglager vorgesehen ist, welches als berührungsfreies Radiallager (24) oder als elastisch eingespanntes Radiallager ausgebildet ist.
